# EUROPÄISCHE PATENTANMELDUNG

(11) **EP 1 353 052 A1**
(43) Veröffentlichungstag der Anmeldung: **15.10.2003**
(21) Anmeldenummer: 03006042.0
(22) Anmeldetag: 19.03.2003
(51) Int. Cl.: F02B 27/02, F02B 75/22

(54) **Luftansaugkanalsystem für Brennkraftmaschinen**

(30) Priorität: 10.04.2002 DE 10215604
(71) Anmelder: Pierburg GmbH, 41460 Neuss (DE)
(72) Erfinder: Vadlja, Tamislav, 41748 Viersen (DE); Huck, Armin, 52072 Aachen (DE); Kühnel, Hans-Ulrich, 41239 Mönchengladbach (DE)
(74) Vertreter: von Kirschbaum, Alexander, Dipl.-Ing.

(57) **Zusammenfassung**

Ein Luftansaugkanalsystem für Brennkraftmaschinen weist mehrere jeweils mindestens durch ein erstes und ein zweites Kanalteil (52,54) ausgebildete Luftansaugkanäle (48,50) auf. Ein gemeinsames Kanalteil (52), das zwei Luftansaugkanälen (48,50) zugeordnet ist, weist zwei Lufteinlassöffnungen (60,62) auf. Durch Schwenken des gemeinsamen Kanalteils (52) kann die Länge der Luftansaugkanäle (48,50) gemeinsam variiert werden.

## Beschreibung

Die Erfindung betrifft ein Luftansaugkanalsystem für Brennkraftmaschinen, insbesondere für V-Motoren.

Aus DE 197 56 332 ist ein Luftansaugkanalsystem bekannt, bei dem die Länge mehrerer jeweils mit einem Zylinder einer Brennkraftmaschine verbindbarer Luftansaugkanäle stufenlos variiert werden kann. Hierzu sind die spiralförmig ausgebildeten Ansaugkanäle nebeneinander angeordnet. Jeder spiralförmige Luftansaugkanal weist eine mit einem zentralen Innenbereich des Luftansaugsystems verbundene Lufteinlaßöffnung auf, durch die Luft in den spiralförmigen Kanal eintritt und nach Durchströmen des spiralförmigen Kanals zu dem entsprechenden Zylinder geleitet wird. Innerhalb des zentralen Bereichs ist ein rohrförmiges Kanalteil angeordnet, durch das die Innenwand des spiralförmigen Kanals gebildet ist und der die Lufteinlaßöffnung aufweist. Der rohrförmige Kanalteil ist schwenkbar angeordnet, so dass die Lage der Lufteintrittsöffnung variiert werden kann. Durch Schwenken des rohrförmigen Kanalteils kann somit die Länge des Luftansaugkanals, d.h. die von der Luft zu durchströmende Strecke zwischen Lufteintrittsöffnung und Luftaustrittsöffnung, stufenlos variiert werden.

Die einzelnen, die Ansaugkanäle bildenden Kanalteile sind benachbart zueinander bzw. stapelförmig angeordnet, wobei die ausgebildeten Luftansaugkanäle abwechselnd mit der einen oder anderen Reihe der Zylinder des V-Motors verbunden sind. Zum Schwenken der inneren schwenkbaren Kanalteile sind diese mit einer Schwenkachse verbunden. Jeder Luftansaugkanal ist somit im wesentlichen durch ein feststehendes Kanalteil und ein schwenkbares Kanalteil gebildet. Das rohrförmige schwenkbare Kanalteil ist in einer Ausnehmung des feststehenden Kanalteils gelagert. Da der Querschnitt der einzelnen Luftansaugkanäle relativ groß sein muss, um eine ausreichende Menge an Luft bereitzustellen, bauen derartige Luftansaugkanalsysteme mit variablen Längen der Luftansaugkanäle, insbesondere bei Sechs- oder Acht-Zylinder-Motoren, äußerst groß.

Aufgabe der Erfindung ist es, ein Luftansaugkanalsystem mit variabler Länge der Luftansaugkanäle zu schaffen, dessen erforderlicher Bauraum verringert ist.

Die Lösung der Aufgabe erfolgt erfindungsgemäß durch die Merkmale des Anspruchs 1.

Bei dem erfindungsgemäßen Luftansaugkanalsystem sind jeweils zwei benachbarte Luftansaugkanäle zusammengefasst. Hierdurch kann der Bauraum des Luftansaugkanalsystems etwa halbiert werden. Um zwei benachbarte Luftansaugkanäle zusammenfassen zu können, ist erfindungsgemäß für diese beiden Luftansaugkanäle ein gemeinsames schwenkbares Kanalteil vorgesehen. Das Kanalteil weist erfindungsgemäß zwei Lufteinlassöffnungen auf, die jeweils mit einem der beiden Luftansaugkanäle verbunden sind. Bei einem prinzipiell wie in DE 197 56 332 aufgebauten Luftansaugkanalsystem mit mehreren nebeneinander angeordneten, schwenkbaren inneren Kanalteilen, die von äußeren Kanalteilen umgeben sind, so dass ringförmige Luftansaugkanäle entstehen, wurde festgestellt, dass die Variabilität der Länge des Ansaugkanals nicht so groß sein muss wie bei derartigen Luftansaugkanalsystemen. Es ist daher möglich, zwei benachbarte Luftansaugkanäle vorzugsweise in einer Ebene anzuordnen. Bei einem prinzipiell den vorstehend beschriebenen Aufbau aufweisenden Luftansaugkanalsystem bedeutet dies, dass der derart ringförmige Kanal im Wesentlichen halbiert wird, so dass je Ansaugkanal im Wesentlichen die Hälfte eines Rings als variable Länge des Ansaugkanals genutzt werden kann.

Vorzugsweise umgeben die beiden Ansaugkanäle das innere schwenkbare Kanalteil jeweils teilweise.

Beispielsweise bei einem Acht-Zylinder-Motor sind vier erfindungsgemäß ausgebildete Luftansaugkanal-Einheiten vorgesehen. Diese werden vorzugsweise über eine einzige gemeinsame Welle zum Schwenken der schwenkbaren Kanalteile betätigt. Es ist somit durch das erfindungsgemäße Vorsehen von jeweils zwei Luftansaugkanäle aufweisenden Luftansaugkanal-Einheiten möglich, nur noch eine Antriebswelle vorzusehen. Dies vereinfacht die Konstruktion des Luftansagkanalsystems gegenüber dem Stand der Technik, in dem zwei Antriebswellen vorgesehen sein müssen, erheblich. Insbesondere sind hierdurch auch die Fertigungskosten reduziert, da sowohl weniger Bauteile erforderlich sind, als auch der Aufbau der einzelnen Bauteile einfacher ausgestaltet sein kann. Da weniger Bauteile erforderlich sind, findet auch eine geringere Addition von Toleranzen statt, so dass eine kleinere Gesamttoleranz erzielt werden kann. Durch Schwenken der gemeinsamen Antriebswelle wird die Ansauglänge der Luftansaugkanäle gleichzeitig für alle Zylinder verändert. Insbesondere bewirkt das Schwenken des gemeinsamen schwenkbaren Kanalteils das gleichzeitige Verändern der Ansauglänge des Luftansaugkanals der beiden die Luftansaugkanal-Einheit bilden Luftansaugkanäle.

Das Vorsehen einer einzigen gemeinsamen Antriebswelle hat ferner den Vorteil, dass Antriebsräder und dgl. zum Verbinden von zwei Antriebswellen nicht erforderlich sind.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Luftansaugkanalsystems für einen 8-Zylinder-V-Motor nach dem Stand der Technik,
- Fig.2: eine schematische Schnittansicht einer erfindungsgemäßen Luftansaugkanal-Einheit in einer ersten Stellung,
- Fig. 3: eine schematische Schnittansicht einer erfindungsgemäßen Luftansaugkanal-Einheit in einer zweiten Stellung und
- Fig. 4: einen Längsschnitt durch ein erfindungsgemäßes Luftansaugkanalsystem.

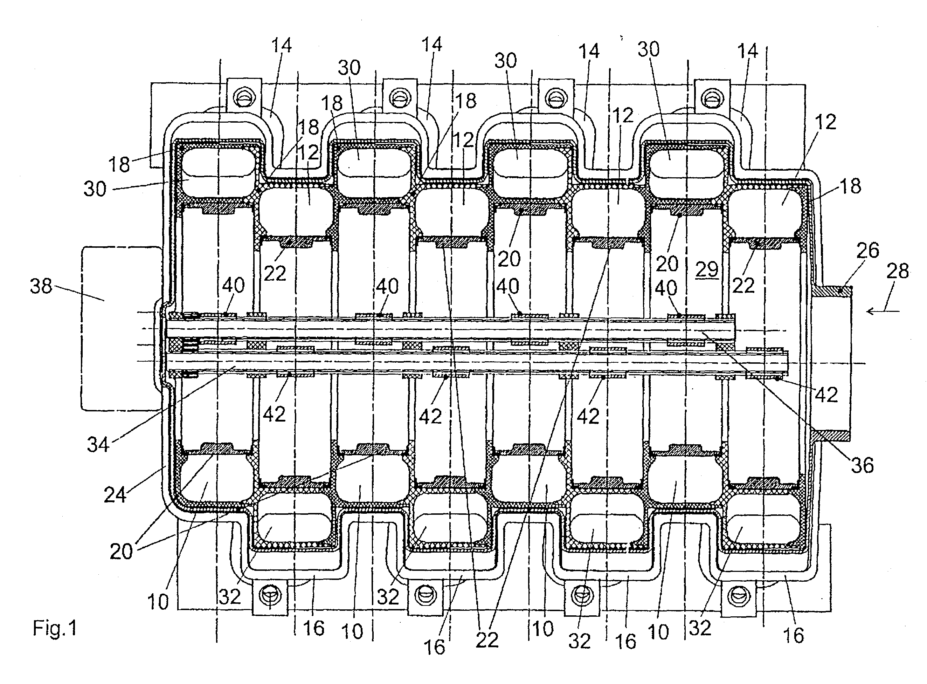

Das in Fig. 1 dargestellte Luftansaugkanalsystem nach dem Stand der Technik weist acht spiralförmig verlaufende Luftansaugkanäle 10,12 auf. Hierbei sind die Ansaugkanäle 10 über Ansätze 14 mit der einen Seite des V-Motors und die Ansaugkanäle 12 über Ansätze 16 mit der anderen Seite des V-Motors verbunden. Die einzelnen Ansaugkanäle sind jeweils durch ein erstes, im dargestellten Ausführungsbeispiel feststehendes Kanalteil 18 und ein zweites, schwenkbares Kanalteil 20,22 gebildet. Mit Ausnahme der beiden in der Figur am linken und rechten Rand vorgesehenen Kanalteile sind sämtliche erste Kanalteile 18 identisch aufgebaut und, wie in Fig. 1 dargestellt, nebeneinander angeordnet bzw. aufeinander gestapelt. Die ersten Kanalteile 18 sind in einem aus zwei Gehäusehälften bestehenden Gehäuse 24 angeordnet. Die schwenkbaren zweiten Kanalteile 20 und 22 sind ebenfalls identisch.

Die den einzelnen Ansaugkanälen 10,12 zuzuführende Luft wird über einen Ansaugstutzen 26 in Richtung eines Pfeils 28 in den gemeinsamen inneren Bereich 29 des Luftansaugsystems geleitet. Der innere Bereich 29 ist durch die nebeneinander angeordneten schwenkbaren Kanalteile 20,22, die jeweils im wesentlichen kreiszylinderförmig sind, gebildet. Je nach Ausführungsform sind ggf. zusätzliche Ansaugöffnungen mit den einzelnen Luftansaugkanälen 10,12 verbunden, so dass sowohl durch den zentralen Bereich des Luftansaugkanalsystems als auch durch die zusätzlichen Zuführkanäle Luft in die Luftansaugkanäle 10,12 gelangt. Aus dem zentralen Bereich des Luftansaugkanalsystems gelangt die Luft durch in den schwenkbaren Kanalteilen 20,22 vorgesehene Lufteinlaßöffnungen in die entsprechenden Luftansaugkanäle 10,12. Aus diesen tritt die Luft durch Luftauslaßöffnungen 30 bzw. 32 aus und wird durch nicht dargestellte Kanäle zu den entsprechenden Zylindern geführt.

Zum Variieren der Länge der Luftansaugkanäle 10,12 sind die schwenkbaren Kanalteile 20,22 mit Schwenkachsen 34,36 fest verbunden. Durch Schwenken der Schwenkachsen 34,36 mit Hilfe eines Stellelements 38 werden die Lufteinlaßöffnungen der schwenkbaren Kanalteile 20,22 in ihrer Lage verändert, so dass die Luft aus dem zentralen Bereich 29 an einer anderen Stelle in die spiralförmigen Luftansaugkanäle 10,12 eintritt und somit einen kürzeren oder längeren Weg zurücklegen muß.

Die zweiten Kanalteile 20 sind über Stege mit Halterungen 40 verbunden und bilden ein Verstellelement. Die Halterungen 40 sind mit der Schwenkachse 36 über ein Rohrprofil (Vierkant) verbunden. Die Verbindung zwischen den Halterungen 40 und der Schwenkachse 36 erfolgt zusätzlich über Blattfedern. Entsprechend sind die Kanalteile 22 über Stege und Halterungen 42 mit der Schwenkachse 34 verbunden. Die Kanalteile 20 bzw. 22 werden somit stets gemeinsam verschwenkt, so dass die Luftansaugkanäle 10 bzw. 12 je Seite des V-Motors gleich lang sind. Das schwenkbare Kanalteil 20 ist zwischen zwei benachbarten feststehenden Kanalteilen 18 angeordnet.

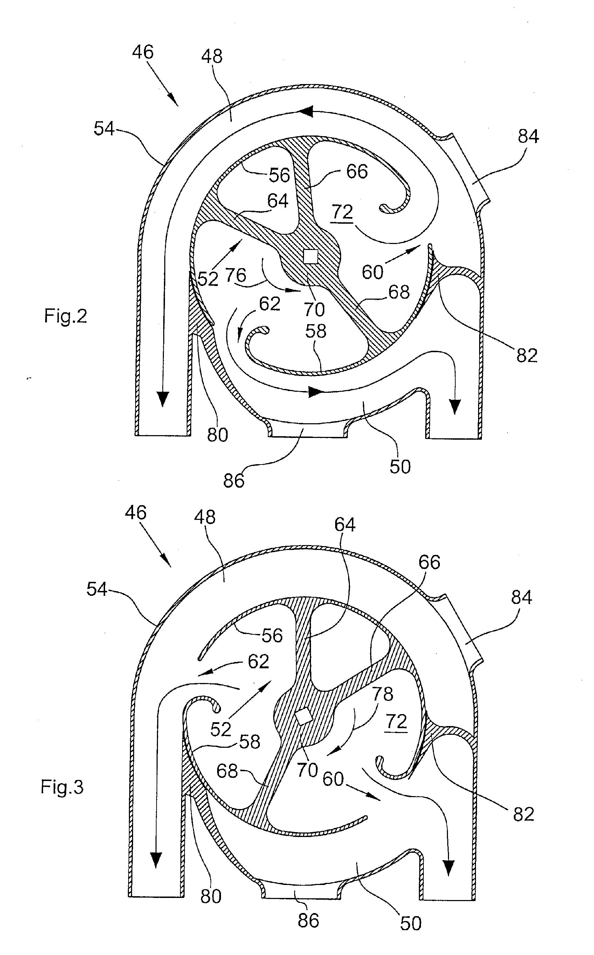

Bei dem erfindungsgemäßen Luftansaugkanalsystem werden bezogen auf den in Fig. 1 dargestellten Stand der Technik zwei benachbarte Luftansaugkanäle, die jeweils zu einer Seite des V-Motors führen, zu einer Luftansaugkanal-Einheit, bei der die beiden Luftansaugkanäle in einer Ebene angeordnet sind, zusammengefügt. Eine derartige erfindungsgemäße Luftansaugkanal-Einheit ist in den Fign. 2-4 dargestellt. Die Luftansaugkanal-Einheit 46 weist jeweils zwei Luftansaugkanäle 48,50 auf. Die beiden Luftansaugkanäle 48,50, die durch ein gemeinsames, schwenkbares Kanalteil 52 sowie ein dieses umgebendes Kanalteil 54 gebildet sind, sind teilweise teilringförmig ausgebildet. Hierzu ist das innenliegende gemeinsame Kanalteil 52 im Wesentlichen ringförmig, wobei zwei Kanalwände 56,58, die jeweils Kanalwände des Luftansaugkanals 48 bzw. 50 bilden, auf einer Kreislinie angeordnet sind. Das gemeinsame Kanalteil 52 weist zwei Lufteintrittsöffnungen 60,62 auf. Die beiden Lufteintrittsöffnungen 60,62 sind einander gegenüberliegend angeordnet und stellen jeweils eine Unterbrechung der Kanalwände 56,58 dar. Die Anordnung der Lufteintrittsöffnungen 60,62 ist in jedem Fall derart gewählt, dass die ausgebildeten Luftansaugkanäle 48,50 die gleiche Länge aufweisen. Dies kann dazu führen, dass die beiden Lufteintrittsöffnungen 60,62 nicht exakt einander gegenüberliegen, sondern leicht versetzt hierzu angeordnet sind.

Das gemeinsame schwenkbare Kanalteil 52 weist ferner Stege 64,66,68 auf, durch die die beiden Kanalwände 56,58 miteinander verbunden sind. Die drei Stege 64,66,68 sind vorzugsweise über ein gemeinsames Aufnahmeteil 70 miteinander verbunden. Die drei Stege 64,66,68 sind vorzugsweise Y-förmig oder sternförmig angeordnet. Die Stege 64,66,68, die zur Stabilisierung des Kanalteils 52 dienen, sind vorzugsweise derart ausgebildet, dass der Innenbereich 72, durch den die Luft angesaugt wird, nicht in einzelne Segmente unterteilt ist. Sämtliche Luftansaugkanäle 48,50 sind somit mit einem gemeinsamen innenliegenden Bereich 72 verbunden.

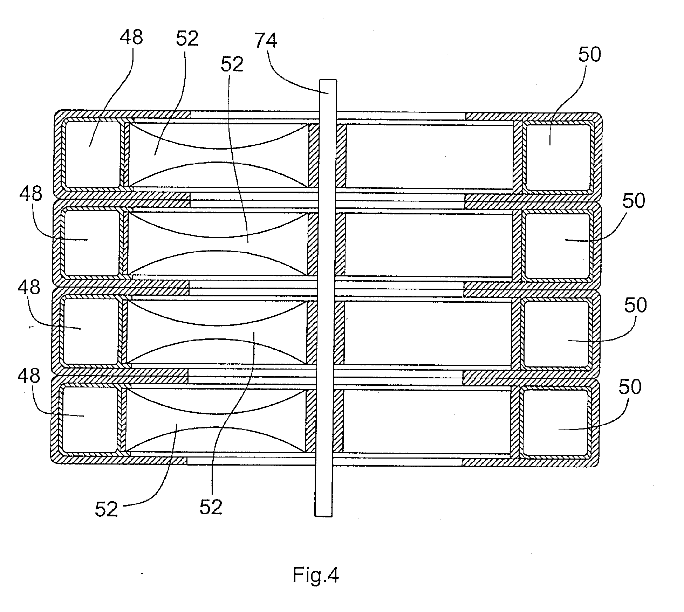

Der Aufnahmeteil 70 ist vorzugsweise im Mittelpunkt des im Wesentlichen kreisförmigen Kanalteils 52 angeordnet, so dass eine gemeinsame zentrale Antriebswelle 74 (Fig. 4) mit beispielsweise quadratischem Querschnitt vorgesehen sein kann, durch die sämtliche Kanalteile 52 gemeinsam geschwenkt werden.

Die Länge der Ansaugkanäle 48,50, von denen jeweils einer mit einem Zylinder der einen Seite des V-Motors und der andere mit einem Zylinder der anderen Seite des V-Motors verbunden ist, kann durch Drehen des Kanalteils 52 in Richtung des Pfeils 76 (Fig. 2) bzw. durch Drehen in Richtung des Pfeils 78 (Fig. 3) verändert werden. Hierbei ist die Länge des Kanals 48,50 bei dem in Fig. 2 dargestellten Zustand maximal, und bei dem in Fig. 3 dargestellten Zustand minimal.

Bei einem erfindungsgemäßen Luftansaugkanalsystem für einen V-8-Motor sind vier Luftansaugkanal-Einheiten 46 übereinander angeordnet (Fig. 4). Die Länge sämtlicher Luftansaugkanäle 48,50 wird durch Schwenken der gemeinsamen Antriebswelle 74 variiert. Hierzu ist zum Variieren der Längen sämtlicher Luftansaugkanäle 48,50 nur eine einzige Antriebswelle 74 erforderlich. Der konstruktive Aufbau des erfindungsgemäßen Luftansaugkanalsystems ist somit erheblich einfacher.

Da die schwenkbaren Kanalteile 52 über eine einzige gemeinsame Welle verschwenkbar sind, ist es möglich, die Kanalteile 52 um 360° oder mehr zu drehen. Anschläge und damit maximale Verstellwinkel, wie sie beim Vorsehen von zwei Antriebswellen (Fig. 1) erforderlich sind, sind bei dem erfindungsgemäßen Luftansaugkanalsystem nicht erforderlich. Es ist somit beispielsweise möglich, die Größe der Lufteintrittsöffnungen 60,62 beispielsweise durch Drehen des Kanals 52 in Fig. 2 entgegen der Richtung des Pfeils 76 zu verringern. Hierbei wird ein Teil der Lufteintrittsöffnungen 60,62 durch jeweils durch ein Abdichtteil 80 bzw. 82 abgedeckt. Die durch die Luftansaugkanäle 48,50 den Zylindern zugeführte Luftmenge kann somit auf einfache Weise durch das Luftansaugkanalsystem variiert werden. Das erfindungsgemäße Luftansaugkanalsystem kann somit auch beispielsweise als Drehzahlbegrenzer eingesetzt werden. Ein Variieren der Luftmenge ist selbstverständlich auch in der in Fig. 3 dargestellten Stellung möglich, indem das Kanalteil entgegen der durch den Pfeil 78 gekennzeichneten Richtung geschwenkt wird.

Die Abdichtteile 80,82 dienen zur Abdichtung zwischen den beiden Luftansaugkanälen 48,50.

Des Weiteren kann jeder Luftansaugkanal 48,50 mit einer Zusatzöffnung 84,86 versehen sein. Durch die Zusatzöffnungen 84,86, die beispielsweise durch Klappen öffen- oder verschließbar sind, kann die durch die Luftansaugkanäle 48,50 zugeführte Luftmenge weiter variiert werden. Ferner ist es möglich, durch die Klappenstellung die Verwirbelung der Luft innerhalb der Luftansaugkanäle 48,50 zu beeinflussen.

## Patentansprüche

1. Luftansaugkanalsystem für Brennkraftmaschinen, mit
mehreren jeweils mindestens durch ein erstes und ein zweites Kanalteil (52,54) ausgebildeten Luftansaugkanälen (48,50),
einer in einem der Kanalteile (52) vorgesehenen Lufteintrittsöffnung (60,62) und einer am anderen Kanalteil (54) vorgesehenen Luftaustrittsöffnung,
wobei mindestens eines der Kanalteile (52,54) zum Variieren der Länge des jeweiligen Luftansaugkanals (48,50) um eine Schwenkachse schwenkbar ist,
**dadurch gekennzeichnet,**
**dass** jeweils zwei Luftansaugkanäle (48,50) ein gemeinsames schwenkbares Kanalteil (52) mit einer ersten und einer zweiten Lufteintrittsöffnung (60,62) aufweisen, die jeweils mit einem der beiden Luftansaugkanäle (48,50) verbunden ist.

2. Luftansaugkanalsystem nach Anspruch 1, **dadurch gekennzeichnet, dass** die Luftansaugkanäle (48,50) das schwenkbare Kanalteil (52) jeweils zu einem Teil umgeben.

3. Luftansaugkanalsystem nach Anspruch 1 oder 2, **dadurch gekennzeichnet, dass** die jeweils zwei Luftansaugkanäle (48,50) im Wesentlichen in einer Ebene angeordnet sind.

4. Luftansaugkanalsystem nach einem der Ansprüche 1-3, **dadurch gekennzeichnet, dass** das gemeinsame Kanalteil (52) zwei im Wesentlichen kreissegmentförmige Kanalwände (56,58) aufweist.

5. Luftansaugkanalsystem nach einem der Ansprüche 1-4, **dadurch gekennzeichnet, dass** die Kanalwände (56,58) des Kanalteils (52) über Stege (64,66,68) miteinander verbunden sind.

6. Luftansaugkanalsystem nach Anspruch 5, **dadurch gekennzeichnet, dass** die Stege (64,66,68) mit einem zentralen Aufnahmeteil (70) verbunden sind.

7. Luftansaugkanalsystem nach Anspruch 6, **dadurch gekennzeichnet, dass** das Aufnahmeteil (70) mit einer Antriebswelle (74) verbindbar ist.

8. Luftansaugkanalsystem nach einem der Ansprüche 1-7, **dadurch gekennzeichnet, dass** die Lufteintrittsöffnungen (60,62) im Wesentlichen einander gegenüberliegend in dem gemeinsamen Kanalteil (52) vorgesehen sind.

9. Luftansaugkanalsystem nach einem der Ansprüche 1-8, **dadurch gekennzeichnet, dass** mehrere jeweils zwei Luftansaugkanäle (48,50) aufweisende Luftansaugkanal-Einheiten (46) nebeneinander angeordnet sind.

10. Luftansaugkanalsystem nach Anspruch 9, **dadurch gekennzeichnet, dass** die schwenkbaren Kanalteile (52) über eine einzige gemeinsame Antriebswelle (74) schwenkbar sind.

11. Luftansaugkanalsystem nach Anspruch 9 oder 10, **dadurch gekennzeichnet, dass** die Lufteintrittsöffnungen (60,62) mit einem für die Luftansaugkanal-Einheiten (46) gemeinsamen Innenbereich (72) verbunden sind.
